# EUROPEAN PATENT SPECIFICATION

(11) **EP 2 631 220 B1**
(45) Date of publication and mention of the grant of the patent: **28.02.2018**
(21) Application number: 11833863.1
(22) Date of filing: 20.10.2011
(51) Int. Cl.: C02F 11/06, B09B 3/00, C04B 18/06, F23G 5/00, F23G 5/30, F23G 7/00

(54) **PROCESSING APPARATUS FOR WASTE MATERIAL INCLUDING SLUDGE**
VORRICHTUNG ZUR VERARBEITUNG VON ABFALLMATERIALIEN EINSCHLIESSLICH SCHLAMM
DISPOSITIF DE TRAITEMENT POUR DES DÉCHETS TELS QUE DES BOUES

(30) Priority: 21.10.2010 CN 201010514609
(43) Date of publication of application: 28.08.2013
(73) Proprietor: Kawasaki Jukogyo Kabushiki Kaisha, Kobe-shi, Hyogo 650-8670 (JP); Anhui Conch Group Company Limited, Wuhu, Anhui 241070 (CN); Anhui Conch Kawasaki Engineering Company Limited, Anhui 241070 (CN); Building Material Design and Research Institute of Anhui Conch, Anhui 241070 (CN); Anhui Conch Kawasaki Energy Conservation Equipment Manufacturing Company Limited, Anhui 241070 (CN); Anhui Tongling Conch Cement Company Limited, Anhui 244000 (CN)
(72) Inventor: HAYASHI, Toshikazu, Hyogo 6508670 (JP); INOUE, Eiji, Hyogo 6508670 (JP); WATANABE, Tatsuya, Hyogo 6508670 (JP); KATAHATA, Tadashi, Hyogo 6508670 (JP); ICHITANI, Noboru, Hyogo 6508670 (JP); MATSUUCHI, Takao, Hyogo 6508670 (JP); GUO, Wensan, Anhui 241070 (CN); LI, Shunan, Anhui 241070 (CN); HE, Chengfa, Anhui 241070 (CN); ZHANG, Changle, Anhui241070 (CN); WANG, Kechun, Anhui 241070 (CN); LI, Zhaohui, Anhui 241070 (CN)
(74) Representative: Leinweber & Zimmermann
(86) International application number: PCT/CN2011/081080
(87) International publication number: WO 2012/051957

(56) References cited:
- WO-A1-96/07622
- WO-A1-98/28237
- CN-A- 1 370 750
- JP-A- 2005 221 195
- JP-A- 2008 239 393
- JP-A- 2009 150 630

## Description

### Technical Field

The present invention relates to a facility for sanitary treatment for wastes by utilizing a cement production facility, and particularly relates to treatment of wastes containing sludge at high water content.

### BACKGROUND ART

In recent years, needs for sanitary treatment of the waste are increased along with the enhancement of the living standards in, for example, developing countries, and it is predicted to increase the amount of the incinerated waste. On the contrary, problems of larger costs and longer construction period required for the construction of the general waste incineration plant are caused. In addition, a problem of shortage of landfills for ash generated in a waste incinerator is arisen in our state, and an installation of an ash melting furnace, an establishment of recycling method for the ash and the like are indispensable requisites in the case where a new disposal site is constructed.

In this aspect, the inventors of the present application developed a waste disposal system, which profitably utilizes the existing cement production facility, and a patent application has been already filed (Patent Document 1). This is to provide a fluidized bed type gasification furnace in vicinity of an existing cement production facility, and in this gasification furnace, a pyrolysis gas, which is generated by gasifying the wastes such as waste and the like, is supplied to a calciner or a burning furnace (kiln) for cement while containing entrained char and ash.

If the pyrolysis gas of the waste can be burned in the calciner or the burning furnace for cement, a waste disposal apparatus can be constructed at considerably lower cost and shorter term than constructing a new dedicated waste incinerator. Moreover, the pyrolysis gas and the char supplied to the calciner and the burning furnace for cement are utilized as a portion of the fuels, and the ash is utilized as a part of the cement raw materials. More specifically, this technology is not limited to utilize the existing cement production facility, but allows to utilize the pyrolysis gas, char and ash resulting from the waste in the process for producing cement, which organize mutually-beneficial relation.

Meanwhile, similarly as in the situation of growing needs of waste treatment as described above, as the equipment of sewage disposal plants are progressed, the disposal amount of the generated sewage sludge is also increasing. While it is general that the sewage sludge fills up after the dewatering, pollutions of ground water and odor are concerned, and to clarify this concern, it is proposed that the sludge is burned with the waste together, or the sludge is thermally decomposed by being supplied to the gasification furnace, as described below. In addition to above, a multi-fuel combustion of a small amount of dewatered sludge in an existing waste incinerator is traditionally conducted.

As an example, Patent Document 2 describes that, in a fluidized furnace employed for the incineration or the pyrolysis of the wastes, the supply quantity of the sludge for the multi-fuel combustion with the solid wastes is changed to suitably control the temperature of the fluidized bed. In addition, it is described that a high calorific value waste such as, for example, wood chip, is supplied to the inside of the furnace, when a mixed combustion of the sludge with other wastes is carried out in the fluidized bed type gasification furnace to maintain a certain amount of heat generation to achieve combustion and pyrolysis in a waste gasifying apparatus as described in Patent Document 3.
[Patent Document 1]
   China Patent Application Unexamined Laid-Open No. 101434461 Specification
[Patent Document 2]
   Japanese Laid-Open Patent Application Publication No. H11-337036 (1999)
[Patent Document 3]
   Japanese Laid-Open Patent Application Publication No. 2006-220365

Another example of an apparatus suitable for treating organic waste is given by Japanese Laid-Open Application Publication No.2005-221195.

### Summary of Invention

However, in general, water content of the dewatered sludge is higher, namely around 80%, and the latent heat of vaporization of water is larger and in addition the particle diameter of the solid content in the dewatered sludge is smaller than the crushed waste, and therefore higher proportion of the sludge is scattered before the gasification and the heat generation in the fluidized bed. Thus, when the rate of the sludge contained in the wastes is increased, the temperature of the fluidized bed is reduced, and thus there is a concern for failing to maintain the pyrolysis reaction (thermal decomposition reaction).

Therefore, the proportion of the sludge for the mixed combustion with the waste in the existing waste incinerator is ordinarily around 5%, and it is the fact that the maximum proportion of the sludge available for the treatment is only around 10%. While it is effective to employ the wood chip as an assistant fuel described in said Patent Document 3, appropriate amount of the high calorific value wastes such as the wood chip for the disposal amount of the sludge is not always ensured to be obtainable on a steady basis, and thus it must point out that the practicality of such a method is poor. For example, assuming that the household wastes (0.8 kg/person/day) and the household sewage (3001/person/day) are concurrently treated, the wastes of 240 t/date and the dewatered sludge of 60 t/date must be simultaneously treated for the city of 300,000 people, and thus it is necessary to concurrent treat the wastes containing 20 % of sludge.

On the basis of the above-described situations, it is an object of the present invention to provide a waste treatment facility which can maintain the temperature of the fluidized bed in the gasification furnace within a preferable range, even if the wastes containing the dewatered sludge having higher water content when the conventional wastes are treated. Moreover, it is an object of the present invention to provide a respective treating method.

According to the invention, the above object is achieved by a waste treatment facility according to claim 1 and by a method of treating wastes according to claim 5. Preferred embodiments are claimed in the dependent claims.

As described above, the inventors of the present application developed the system that achieves the mutually-beneficial relation between the existing cement production facility and the waste treatment facility is installed in vicinity thereof, and have obtained an inventive idea for utilizing the waste heat of the cement production facility as a source of heat for maintaining the temperature of the fluidized bed in the gasification furnace in eagerly proceeding the study for the further improvement of this system, and have eventually reached to the completion of the present invention.

More specifically, the invention according to claim 1 is directed to a waste treatment facility suitable to be installed in vicinity of a cement production facility, comprising:
a fluidized bed type gasification furnace configured to gasify wastes to generate pyrolysis gas;
a gas transport path suitable to transport the pyrolysis gas generated in the gasification furnace to a preheater or a calciner for cement in the cement production facility while containing entrained char and ash; and a temperature elevating device configured to elevate the temperature of fluidizing air to be supplied to the aforementioned gasification furnace by utilizing waste heat of the aforementioned cement production facility.

Having such a configuration, the fluidizing air having elevated temperature is supplied to the fluidized bed type gasification furnace for treating the wastes, such that the temperature of the fluidized bed in the gasification furnace can be maintained within an appropriate range even if relatively larger amount of dewatered sludge is contained in the wastes. Since the waste heat of the cement production facility is utilized for elevating the temperature of the fluidizing air, no assistant fuel is needed to be consumed or the consumption thereof can be considerably reduced, providing higher environmental compatibility.

Then, the pyrolysis gas generated in the gasification furnace is transported to the preheater or the calciner for cement through the gas transport path while containing entrained char and ash, so that the heat of the combustion is utilized in preheating and in calcining for the cement raw materials. The water vapor generated from the dewatered sludge is transported together with this pyrolysis gas, and the heat used for elevating the temperature of the fluidizing air is also transported to the preheater and the calciner for cement together with these gases as described above.

More specifically, the waste heat of the cement production facility is utilized for the temperature maintenance of the fluidized bed in the gasification furnace, and then is returned to the cement production facility again together with the pyrolysis gas and the like generated there. In other words, a combination of the use of the waste treatment facility and the cement production facility allows profitably utilizing the heat generated in the cement production facility as effectively as possible to maintain the fluidized bed temperature of the gasification furnace, and as a result, larger amount of sludge than the conventional treatment can be treated simultaneously with the waste.

In the above-described waste treatment facility, the gasification furnace comprises a supplying device, which is capable of supplying the dewatered sludge and other wastes separately. This can achieve suitable adjustment of the temperature of the fluidized bed by, in addition to adjusting the amount of the whole wastes including dewatered sludge, suitably adjusting the input amount of any one of the dewatered sludge and other wastes, which exhibit different amount of heat generation from each other, or suitably changing the proportion of the input amounts of both. In particular, it is effective to adjust the input amount of the dewatered sludge containing water at higher water content.

In addition to above, the "input amount" used here means an input amount per unit time, and "to adjust it" means, for example, not only conducting a feedback control by changing the input amount according to the temperature of the fluidized bed, but also investigating the amounts of heat generations of the dewatered sludge and other wastes in advance, and then defining the operating conditions such as the input amount or the proportion of the dewatered sludge and other wastes so as to maintain the temperature of the fluidized bed within predetermined range.

As an example, the proportion of the input amounts of the dewatered sludge and other wastes may be adjusted so that the lower calorific value of the whole wastes containing the dewatered sludge is equal to or higher than a predetermined value (for example, around 800 to 1,200 kcal/kg), such that sufficient heat quantity required for causing the pyrolysis through the autogenous combustions of those can be ensured, and thus a supply of an assistant fuel can be unnecessary.

To that end, for example, the component analysis of the dewatered sludge is conducted in advance before supplying in the gasification furnace to obtain the lower calorific value, and the obtained lower calorific value is stored. After that, first of all, the wastes except the dewatered sludge are supplied to the gasification furnace, and the temperature of the fluidized bed is measured, and on the basis of this measurement result, the lower calorific value of the wastes except the dewatered sludge is estimated. Then, on the basis of the estimated value and the lower calorific value of the above-described stored dewatered sludge, the proportion of the input amounts of the dewatered sludge and other wastes may be suitably adjusted, so as to provide the lower calorific value of the whole wastes as equal to or higher than the aforementioned predetermined value.

Upon adjusting the proportion of the input amounts as described above, the temperature of the fluidized bed is measured while the dewatered sludge and other wastes are supplied, the input amounts of the dewatered sludge may be changed on the basis of this measurement result to suitably provide the temperature of the fluidized bed to approach to the target temperature. The temperature of the fluidized bed may be rapidly adjusted by changing the input amount of the dewatered sludge containing water at higher water content.

Another example is that, the measurement of the temperature of the fluidized bed is first conducted while supplying the wastes except the dewatered sludge to the gasification furnace, and on the basis of this measurement result, the input amount of the aforementioned waste (dewatered sludge is not contained) is adjusted, so as to achieve the temperature of the fluidized bed to be higher than the target temperature. Then, the measurement of the temperature of the fluidized bed is also conducted while additionally supplying the dewatered sludge to the gasification furnace, and on the basis of this measurement result, the input amount of the dewatered sludge may be suitably adjusted so as to provide the fluidized bed temperature as being the aforementioned target temperature.

In this regard, the input amount of the wastes except the dewatered sludge may be constantly maintained, or alternatively, the input amount thereof may be changed. Alternatively, the input amount of other wastes may be controlled, in place of the control of the input amount of the dewatered sludge. Since the gasification furnace is generally operated in the absence of oxygen in which the air ratio is smaller than 1, increased input amount of the wastes provides reduced bed temperature depending on the heat capacity. On the other hand, increased supply quantity of the fluidizing air causes enhanced combustion to achieve elevated bed temperature.

In addition, since the waste heat of the cement production facility is utilized to elevate the temperature of the fluidizing air supplied to the gasification furnace in the present invention as described above, the temperature of the fluidized bed is adjusted by controlling the level of this elevated temperature, or in other words controlling the heat quantity provided to the fluidizing air. In addition, the temperature of the fluidized bed is controlled by adjusting the supply quantity of the fluidizing air or the temperature thereof or the like, as well as by adjusting the input amount of the wastes containing the dewatered sludge, thereby providing improved controllability and enhanced flexibility. For example, the temperature of the fluidized bed can be maintained at an optimal temperature, while satisfying various types of conditions such as maintaining the inside of the gasification furnace at an negative pressure, while maintaining the fluidizing state of the bed material and the like.

Meanwhile, in the case the dewatered sludge is supplied to the fluidized bed of the gasification furnace as described above, if the sludge is supplied to a single location in larger quantity, a significant local decrease of the temperature around the location is caused, and thus there is a concern that the pyrolysis reaction does not proceed. Thus, to increase the proportion of the supply of the dewatered sludge, the distributed supply to the fluidized bed of the gasification furnace is carried out from multiple locations of the upper side thereof This allows improved controllability for the temperature of the fluidized bed, and therefore it is advantageous to maintain the temperature thereof within a predetermined range.

Further, in order to take a countermeasure in the case that the suitable bed temperature cannot be maintained only by providing the elevated temperature of the fluidizing air as described above, a fuel supply device for supplying an assistant fuel to the fluidized bed may be included. This allows that increased amount of the dewatered sludge can be treated and, even if the wastes are so-called low quality wastes, in which the amount of the heat generation from the wastes except the dewatered sludge is lower than the assumed heat generation, suitable bed temperature can be maintained by the combustion of the assistant fuel.

Available assistant fuel having such a feature includes, more specifically, a solid assistant fuel such as pulverizing coal, which may be supplied to a freeboard of the upper side of the fluidized bed. In this case, the use of the excessively finer grains of the pulverized coal causes easy discharge from the gasification furnace by being entrained with the flow of the pyrolysis gas, and on the other hand, the use of the excessively larger grains of the pulverized coal causes rapid sedimentation of the grains in the fluidized bed, which likely leads to insufficient contribute to the combustion. Thus, mean particle diameter of the pulverized coal is preferably around 0.1 to 3 mm.

In addition to above, the assistant fuel is not limited to the pulverized coal, and other than that, any type of the fuel may be available as long as the fuel is burned in the fluidized bed, such as, for example, scrap tires, plastics, wood chips, charcoals, sludge carbides, and the like.

The above-described waste treatment facility may include a dryer for drying the dewatered sludge before being supplied to the gasification furnace by utilizing the waste heat of the cement production facility. This can provide enhanced amount of the heat generation from the wastes containing the dewatered sludge, which is profitable for maintaining the suitable temperature of the fluidized bed. This can also provide reduced water content of the dewatered sludge, and therefore the local temperature decrease in the fluidized bed caused by the supply of the wastes can be inhibited.

As described above, according to the waste treatment facility of the present invention, the temperature of the fluidized bed is maintained within a predetermined range by elevating the temperature of the fluidizing air by the waste heat of the cement production facility, even if the wastes treated in the gasification furnace contains larger amount of the dewatered sludge having high water content. More specifically, larger amount of the dewatered sludge than the conventional case can be treated simultaneously with treatment the waste in the waste treatment facility by profitably utilizing the heat generated in the cement production facility as effectively as possible.

### Brief Description of the Drawings

[Fig. 1] Fig. 1 is a systematic diagram of a waste treatment facility according to first embodiment of the present invention.
[Fig. 2] Fig. 2 is a system flow diagram, illustrating configurations of a gasification furnace and a control system thereof in the waste treatment facility.
[Fig. 3A] Fig. 3A is a graphic diagram for illustrating local temperature decrease in locations for supplying the dewatered sludge in the fluidized bed in the case of larger diffusion constant.
[Fig. 3B] Fig. 3A is a graphic diagram for illustrating local temperature decrease, representing similarly as in Fig. 3A, in the case of smaller diffusion constant.
[Fig. 4] Fig. 4 is a graphic diagram, showing experimental results on relation of standard deviation of the fluidized bed temperature over hearth area of the gasification furnace.
[Fig. 5A] Fig. 5A is a flow chart, showing an example of a method of operating the gasification furnace.
[Fig. 5B] Fig. 5B is a flow chart, showing a procedure for adjusting quantity of supply of the dewatered sludge in ordinary operation routine for the gasification furnace.
[Fig. 6] Fig. 6 is a time chart, showing change of input amount for the waste and the dewatered sludge with corresponding change of the fluidized bed temperature in case of ordinary operation.
[Fig. 7] Fig. 7 is a graphic diagram of simulation results for investigating the level of the increase in the processible amount of the dewatered sludge by elevating the temperature of the fluidizing air.
[Fig. 8] Fig. 8 is a systematic diagram of a waste treatment facility according to second modified embodiment where a cooler exhaust gas is entered in the calciner, representing similarly as in Fig. 1.
[Fig. 9] Fig. 9 is a systematic diagram of a waste treatment facility and a cement production facility according to modified embodiment comprising a calciner including a swirling calcining chamber and a mixing chamber, representing similarly as in Fig. 1.
[Fig. 10] Fig. 10 is a systematic diagram of a waste treatment facility according to modified embodiment where an annular bundled section is provided on the way of the peripheral wall to introduce air for recombustion in vicinity of the bundled section, representing similarly as in Fig. 1.
[Fig. 11] Fig. 11 is a systematic diagram of a waste treatment facility and a cement production facility having no calciner, representing similarly as in Fig. 1.

### Reference Citation Lists

100 waste treatment facility
1 gasification furnace
4 waste introduction device
6 gas transport line (gas transport path)
7 feeding device for assistant fuel (fuel supply device)
8 sludge supplying system
80 sludge layer
81 sludge introduction device
200 cement production facility
10 suspension preheater (preheater)
20 calciner
40 air quenching cooler (clinker cooler)
41 gas air heater (temperature elevating device)

### Description of Embodiments

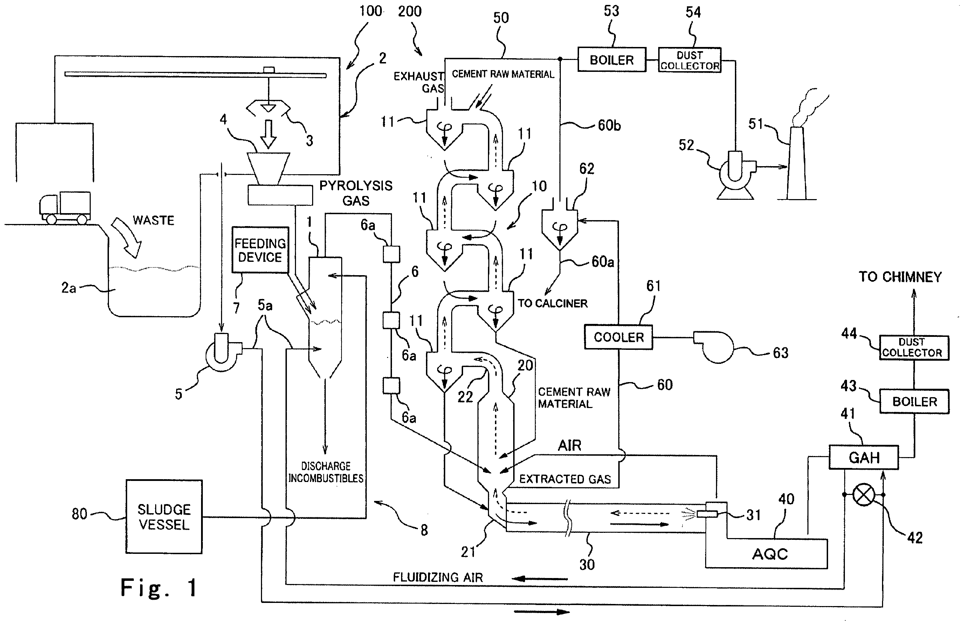

Preferable embodiments of the present invention will be described below, in reference to the annexed figures. Fig. 1 is an overall systematic diagram of a waste treatment facility 100 according to first embodiment, and a cement production facility 200, in vicinity of which the waste treatment facility is installed. In the waste treatment facility 100 shown in the left side of Fig. 1, the wastes are thermally decomposed in a gasification furnace 1, and a mixed combustion of the generated gas (pyrolysis gas) is conducted in the burning process for the cement. Since the quantity of this pyrolysis gas is, as an example, 20,000 to 30,000 Nm³/h, which is considerably smaller as compared with the quantity of the exhaust gas from the illustrated cement production facility 200 (300,000 Nm³/h as an example), the waste treatment facility 100 can be constructed in vicinity of the existing cement plant substantially without a need for a modification of the cement plant.

### - Waste Treatment Facility -

The wastes containing combustible matters such as for example, waste disposed from homes, waste plastics and the like (hereinafter referred to as "waste and the like" or "waste such as waste and the like" particularly in the case of distinguishing from the dewatered sludge) are accumulated in the waste treatment facility 100. These wastes are transported through the land-transportations or the like and are supplied to a bunker 2a in a pit 2, and are then crushed by employing the crusher, which is not shown here. The wastes crushed in this way are carried by a crane 3 to be supplied to a waste input device 4 composed of a hopper or a conveyer or the like, and are supplied to the gasification furnace 1 by means of the action of this waste input device 4.

In addition, in the present embodiment, a sludge supplying system 8 for supplying the dewatered sludge to the gasification furnace 1 to process is also provided, separately from the aforementioned waste and the like. The dewatered sludge is a solid content, which is isolated from the sewage sludge in the sewage disposal plant that is not shown in the figure, and is carried through the land-transportations or the like, and is retained in a sludge vessel 80. Though it is not shown here, the vehicle carrying the dewatered sludge is, in place of the sludge, loaded with sewage from a pit 2, and carries the sewage turning back to the sewage disposal plant. While evaporation processing was conventionally employed for the sewage from the pit 2, the method of the carrying the sewage out to the sewage disposal plant is employed as described above to allow heat for vaporizing the sewage being utilized for another application.

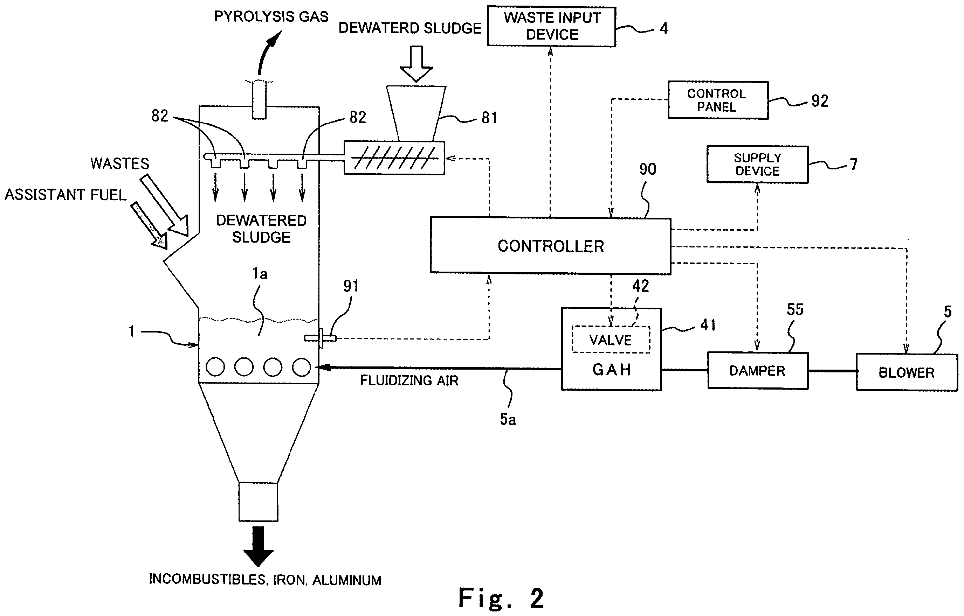

On the other hand, the dewatered sludge retained in the sludge vessel 80 is supplied to the gasification furnace 1 by the action of a sludge input device 81 including a conveyer or the like (see Fig. 2), similarly as the wastes of the aforementioned waste and the like. This sludge input device 81 and/or the above-described waste input device 4 comprise, as an example, a screw conveyer, and the input per unit time of the waste and the like and the dewatered sludge can be suitably adjusted by changing the working speed thereof. The input amount of the wastes containing the dewatered sludge can be adjusted in this way, and the temperature in the fluidized bed 1a in the gasification furnace 1 can be suitably controlled, as well as the control of the temperature and the flow rate of the fluidizing air as describe hereinafter.

More specifically, the gasification furnace 1 is a fluidized bed type furnace, and also as shown in Fig. 2, the lower section in the furnace of the gasification furnace 1 is filled with fluidization sand (bed material) to form the fluidized bed. In this configuration, the fluidizing sand particles are whirled by the supply of the fluidizing air, and the air flows toward the upper side through the clearances therebetween. Once the wastes containing the dewatered sludge are supplied to the fluidized bed 1a, these are thermally decomposed while being dispersed by means of the fluidizing sand to be eventually gasified. In this occasion, a portion of the wastes is burned to maintain the temperature of the fluidized bed and accelerate the pyrolysis reaction.

The fluidizing air supplied to the fluidized bed is drawn out from the pit 2 for the wastes by an electric blower 5 in the present embodiment, and this maintains the interior of the pit 2 at a negative pressure, so that odor is hardly leaking to the outside. Further, the temperature of the air from the blower 5 is elevated by utilizing the waste heat of the cement production facility 200 as will be discussed later, and then the air is supplied to the gasification furnace 1. As described above, heat is supplied by means of the intermediary fluidizing air, so that the suitable temperature of the fluidized bed 1a can be maintained, even if the mixed combustion with larger amount of the dewatered sludge is conducted.

In detail, the lower calorific value of the wastes of waste and the like is generally around 1,000 to 3,000 kcal/kg, the combustion of the portions thereof can ensure the heat of reaction for the pyrolysis to maintain the temperature of the fluidized bed 1a at an optimal temperature. On the other hand, while organic substances in sewage is included in the dewatered sludge and thus potential amount of heat generation thereof is higher, the water content thereof is considerably higher, as around 80%, and the lower calorific value is lower, the thus mixed combustion thereof with the wastes such as the waste and the like causes difficulty in maintaining the suitable bed temperature.

Therefore, the present embodiment involves, not only suitably adjusting the input amount of the waste and/or the dewatered sludge, but also adequately establishing the temperature and the flow rate of the fluidizing air, so that the fluidized bed temperature is maintained within an appropriate range of around 500 to 600 degrees C, even if the mixed combustion with relatively larger amount of the dewatered sludge is conducted in the gasification furnace 1. More specifically, as schematically show in Fig. 2, a temperature sensor 91 is disposed at the fluidized bed 1a, and a controller 90, which is configured to receive a signal from this sensor suitably controls the operations of the waste input device 4 and the sludge input device 81.

In addition, a gas air heater 41 (GAH: temperature elevating device) for elevating the temperature of the air from the blower 5 is equipped with a bypass valve 42 for adjusting the flow rate of the air for creating bypass thereof, and the opening of the valve is suitably controlled by the controller 90 to adjust the temperature of the fluidizing air. Further, a damper 55 (shown only in Fig. 2) having an ability to adjust the level of the opening is installed on the way of air supply path 5a extending from blower 5 through the gas air heater 41 is passed to the gasification furnace 1, the level of the opening of this damper 55 and the rotating speed of the blower 5 are controlled by the controller 90 to provide an adjustment of the flow rate of the fluidizing air.

When the temperature of the fluidizing air is elevated in this way to, for example, around 150 to 200 degrees C, a considerable amount of heat can be supplied to the fluidized bed 1a, so that the wastes containing larger amount of the dewatered sludge can be processed without decreasing the bed temperature. Nevertheless, the amount of heat generation may be unexpectedly reduced depending upon the type of the waste and the like (for example, so-called low quality wastes of lower than 1,000 kcal/kg), and in such a case, the temperature of the fluidized bed 1a may not be maintained even if the temperature of the fluidizing air is elevated as described above.

Concerning this aspect, in order to supply an assistant fuel such as, for example, pulverized coal, from an input port for the wastes into the freeboard in the gasification furnace 1, a feeding device 7 for the pulverized coal is provided in the present embodiment. Then, mean particle diameter of the pulverized coal supplied to the fluidized bed from the upside by the feeding device 7 is designed to be around 0.1 to 3 mm. This is because the following reason: when the particle diameter of the pulverized coal is 0.1 mm, the terminal velocity can be calculated to be about 0.9 m/s, which is slightly lower than the flow velocities of the air and the pyrolysis gas rising in the inside of the gasification furnace 1 (superficial flow velocity for gas basis), causing the scatter of the most of the pulverized coal, leading to substantially no contribution to the combustion.

On the other hand, excessively larger particle diameter of the pulverized coal may cause rapidly descending through the fluidized bed 1a to falls out, leading to possibly smaller contribution to the combustion. The time required for the combustion of the pulverized coal having particle diameter of 3.0 mm in the fluidized bed 1a at around 500 degrees C is around dozens of times as much as the time required for the particles having particle diameter of 0.1 mm, and thus it is necessary to ensure a certain amount of the residence time of particles in the bed for achieving the certain contribution to the combustion in the bed. Here, the calculated minimum fluidizing velocity of the pulverized coal having particle diameter of 3.0 mm is about 1.8 m/s, which is equivalent to the superficial velocity in the fluidized bed 1a in the gas basis, and therefore, there would be no problem if the mean particle diameter is selected to be equal to or smaller than 3 mm.

Therefore, the temperature of the fluidized bed 1a can be maintained within an appropriate range even if the wastes containing larger amount of the dewatered sludge is supplied, by suitably supplying the pulverized coal as required, and the wastes can be effectively thermally decomposed to be gasified.
This pyrolysis gas is discharged from the upper portion of the gasification furnace 1 and is transported to the cement production facility 200 through the gas transport line 6 (gas transport path). The char and the ash, which are unburned portions, are floating in the form of small particles in the pyrolysis gas, and are transported together with the pyrolysis gas.

In the present embodiment, the pyrolysis gas from the gasification furnace 1 is transported by utilizing the negative pressure in the calciner 20 for cement as will be discussed later, which achieves maintaining the negative pressure in the inside of the gasification furnace 1 and preventing the leakage of the pyrolysis gas to the exterior. In addition, since the pyrolysis gas can be transported by the negative pressure of the calciner 20, no air blower is provided in the gas transport line 6. Therefore, there is no concern for causing failure due to the adhesion and the deposition of the char and the ash contained in the pyrolysis gas on the impeller of the blower.

However, the char and the ash may be adhered and deposited over the inner wall of the duct of the gas transport line 6 with the passage of time, resulting in the increased pressure loss, and therefore, in the present embodiment, a plurality of ejector devices 6a are disposed on the way of the gas transport line 6 with intervals therebetween that are longer than a predetermined distance. These respective ejector devices 6a are employed to intermittently blow compressed air supplied from a compressor which is not shown, so that the deposited char and ash can be blasted off. In addition to above, though it is not shown here, an openable damper is provided in the gas transport line 6, which is capable of being closed when the operation of the waste treatment facility 100 is stopped.

As contrasted with the pyrolysis gas from the wastes, which is discharged from the upper portion of the gasification furnace 1 to the gas transport line 6 in this way, the incombustibles containing metallic pieces, which come from the residual substance after the pyrolysis in the gasification furnace 1, settles through the fluidizing sand, and fall out with the sand from the bottom end of the gasification furnace 1. This can be expressed in other words that the separation of the residual substances from the wastes with the fluidized bed 1a is achieved through so-called specific gravity-isolation. The sand and the incombustibles discharged from the gasification furnace 1 in this way are conveyed by a conveyer which is not shown, and the sand isolated by a classifier, which is located outside of the diagram, is returned to the gasification furnace 1. On the other hand, metallic components are sorted out from the incombustibles by employing a screening device, and the rest of the incombustibles are utilized as cement raw materials.

### - Cement Production Facility -

The cement production facility 200, in an example of Fig. 1, includes a general new suspension preheater (NSP) kiln. The cement raw materials are preheated in a suspension preheater 10 serving as a preheater, and then, is heated to around 900 degrees C in the calciner 20 (calcining process), and is burned at higher temperature of around 1,500 degrees C in a rotary kiln 30 serving as a burning furnace. The burned product passed through the rotary kiln 30 is quenched in an air quenching cooler (AQC) 40 to form granular cement clinker, which is, in turn, sent to a finishing process that is located outside of the diagram.

The aforementioned suspension preheater 10 comprises multiple levels of cyclones 11 provided one above the other along the longitudinal direction. Each of the cyclones 11 serves as achieving heat exchange of the cement raw materials with the exhaust gas of high temperature blown from the downside level while transporting the cement raw materials with the swirling flow. This flow of the exhaust gas is formed by the exhaust gas of high temperature from the rotary kiln 30 (hereinafter referred to as kiln exhaust gas) blowing up through the calciner 20 to be supplied in the cyclone 11 of the lowest level, as will be discussed later. The kiln exhaust gas, as shown with dotted line in the diagram, ascends step after step of the multiple levels of the cyclones 11 to reach the cyclone 11 of the uppermost level, and then is discharged to an exhaust gas line 50 therefrom.

As illustrated in the diagram, an induced draft fan 52 having larger capacitance is provided in the exhaust gas line 50 for drawing the kiln exhaust gas to deliver it to a chimney 51, and the front side of this induced draft fan 52, or in other words, in the side of the upstream of the exhaust gas flow, a gas cooler 53 (as an example, boiler) and a dust collector 54 are arranged. The induced draft fan 52 draws larger quantity of the exhaust gas from the rotary kiln 30 through the suspension preheater 10 and the calciner 20, and further, creates the negative pressure in the calciner 20, which also functions as drawing the pyrolysis gas from the gasification furnace 1.

On the other hand, in each of the cyclones 11 of the suspension preheater 10, the heat exchange of the cement raw materials with the high temperature kiln exhaust gas is achieved as described above, and then, the cement raw materials fall downward as shown with a solid line in the diagram to move to the cyclone 11 in the next level below. In this way, the cement raw materials are sufficiently preheated while sequentially passing through a plurality of cyclones 11 step by step from the uppermost level cyclone 11, to be supplied to the calciner 20 from the cyclone 11 before the lowermost level.

The calciner 20 is provided at the introduction section of the rotary kiln 30 so as to extend along the longitudinal direction, and the bottom end thereof is connected with a lower duct 21 that links to the rotary kiln 30, and on the other hand, the upper end of the calciner 20 is connected with an upper duct 22 that links to the cyclone 11 of the lowermost level of the suspension preheater 10. The the kiln exhaust gas induced by the induced draft fan 52 as described above is entered from the lower duct 21 into the bottom end of the calciner 20 to form the blowing-up jet flow.

Though it is not shown here, the lower section of the calciner 20 is equipped with a supply port for the pulverizing coal serving as an assistant fuel, a gas inlet of the pyrolysis gas from the gasification furnace 1 as described above, and an air inlet for combustion thereof, respectively. A cooler exhaust gas of high temperature from the air quenching cooler 40 is utilized as the combustion air, which is drawn by the negative pressure in the calciner 20 similarly as in the case of the pyrolysis gas. The pyrolysis gas and the air for combustion suctioned into the calciner 20 are burned for sufficient time, while being mixed with the kiln exhaust gas of high temperature.

Then, the cement raw materials supplied to the calciner 20 are heated to around 900 degrees C while being blown up to ascend through the calciner 20, so that decarboxylation of 80 to 90 % of the lime component is achieved. Then, the materials are conveyed from the top of the calciner 20 through the upper duct 22 to the cyclone 11 of the lowermost level of the suspension preheater 10, and in this configuration, the kiln exhaust gas is separated from the cement raw materials and is transported toward the cyclone 11 in the next level above, and on the other hand, the cement raw materials fallout from the bottom end of the cyclone 11 to reach to the entrance of the rotary kiln 30.

The rotary kiln 30 is configured to include, as an example, a rotating stove having horizontally-long cylindrical shape with a length of 70 to 100 m, which is disposed to be slightly slanted downward from the entrance toward the exit thereof. The rotating stove is moderately rotated around the central axis thereof to transport the cement raw materials toward the side of the exit. This side of the exit is provided with a combustion device 31, which spouts out the combustion gas of high temperature created by the combustion of the coal, natural gas, heavy oil and the like toward the side of the entrance. The cement raw materials, which are enveloped by the combustion gas, causes a chemical reaction (cement burning reaction), and is burned until a part of the cement raw materials is in the semi-melting state.

This cement burned product is subjected to a cold blast in the air quenching cooler 40 to be quenched to create granular cement clinker. While the illustration and the detailed description are not presented, the cement clinker is stored in a clinker silo, and then, gypsum and the like is added to provide suitable formulation, and after that, is pulverized by using a mill (finishing process). On the other hand, the cooler exhaust gas heated to a temperature of around 800 degrees C by drawing heat from the burned product is supplied in the calciner 20 as the air for combustion as described above. More specifically, the waste heat is recovered to heat the air for combustion in the calciner 20 to achieve enhancement of the thermal efficiency.

In addition, a portion of the cooler exhaust gas is guided to the gas air heater 41, and heat exchange with the fluidizing air transported from the blower 5 of the waste treatment facility 100 is achieved as described above. The temperature of the fluidizing air can be elevated to around 300 degrees C by the heat exchange with the cooler exhaust gas of high temperature, and is generally adjusted within the range of around 100 to 300 degrees by the adjustment of the flow rate of the air flowing through the bypass passage that is not shown here. The flow rate of the air that bypasses the gas air heater 41 is adjusted according to the level of the opening of the bypass valve 42 controlled by the controller 90 as described above. In addition to above, the cooler exhaust gas, which is thermally exchanged with the fluidizing air to reduced its temperature, flows through the boiler 43 and the dust collector 44, and then proceeds to a chimney.

In addition to the above-described configuration, a bypass line 60 is further provided in the cement production facility 200 of the present embodiment, for the purpose of preventing unwanted concentration of chlorine component or alkali component in the gas during the circulation of the gas through the suspension preheater 10 and the calciner 20. More specifically, when a mixed combustion with the pyrolysis gas from the wastes is conducted in the cement production facility as in the present embodiment, concentrations of the chlorine component and the alkali component in the cement clinker tend to be increased by the influence of the chlorine component and the alkali component originally contained in the wastes, leading to possibly causing troubles related to the adhesion.

In order to solve the problem, the bypass line 60 connected to the lower section (or lower duct 21) of the calciner 20 is utilized in the illustrated cement production facility 200 to extract a portion of the gas, and then the extracted gas is cooled by a cooler 61, and then is transported to a cyclone 62 (classifier) to classify the dusts off. Cold blast is supplied to the cooler 61 by means of a fan 63, and the extracted gas is quenched to a temperature equal to or lowers than the melting point of the chlorine compound or the like to separate the chlorine component or the alkali component in the extracted gas as solid matters (dusts).

Then, the dusts in the extracted gas is classified into coarse powder and fine powder in the cyclone 62, in which the coarse powder containing substantially none of the chlorine component and the alkali component falls from the bottom end of the cyclone 62, and is returned to the calciner 20 through a return line 60a, which is shown in the diagram while omitting a section thereof On the other hand, the fine powder containing higher concentrations of the chlorine component and the alkali component is entrained with the extracted gas drawn out by the cyclone 62 to be discharged in a downstream-side line 60b of the bypass line 60, and then is recovered by a dust collector 54.

While the system of Fig. 1 is shown as connecting the downstream-side line 60b of the bypass line 60 on the way of the exhaust gas line 50 to share the induced draft fan 52, the gas cooler 53 and the dust collector 54, which are used to deliver the kiln exhaust gas to the chimney 51, the real system employs dedicated induced draft fan, gas cooler and dust collector in the bypass line 60.

### - Distributed Supply of Dewatered Sludge to Gasification furnace -

Since the dewatered sludge having higher water content as compared with the waste and the like is supplied to the gasification furnace 1 in the waste treatment facility 100 of the present embodiment as described above, the fluidized bed temperature may be locally decreased in vicinity of the supplying locations. When larger amount of the dewatered sludge concentrates on a single location, there is a concern that the temperature decreases to lower than the lower limit required for maintaining the pyrolysis reaction (450 degrees, for example). This local decrease of the temperature is strongly influenced by the flow rate of the dewatered sludge supplied in a single location and a rate of the diffusion thereof in the fluidized bed 1a.

Here, simulations for investigating a change of the fluidized bed temperature were conducted for assuming multiple diffusion rates, based on the assumption that the proportion of the dewatered sludge in the wastes is 25%. Since the diffusion rate generally changes according to the size and the property of the fluidizing sand in the fluidized bed 1a, the state of a fluidization and the particle size, the water content, and the viscosity and the like of the dewatered sludge, a diffusion constant that bundles these factors was defined, and the specific value was obtained by the experiments, the obtained value was employed.

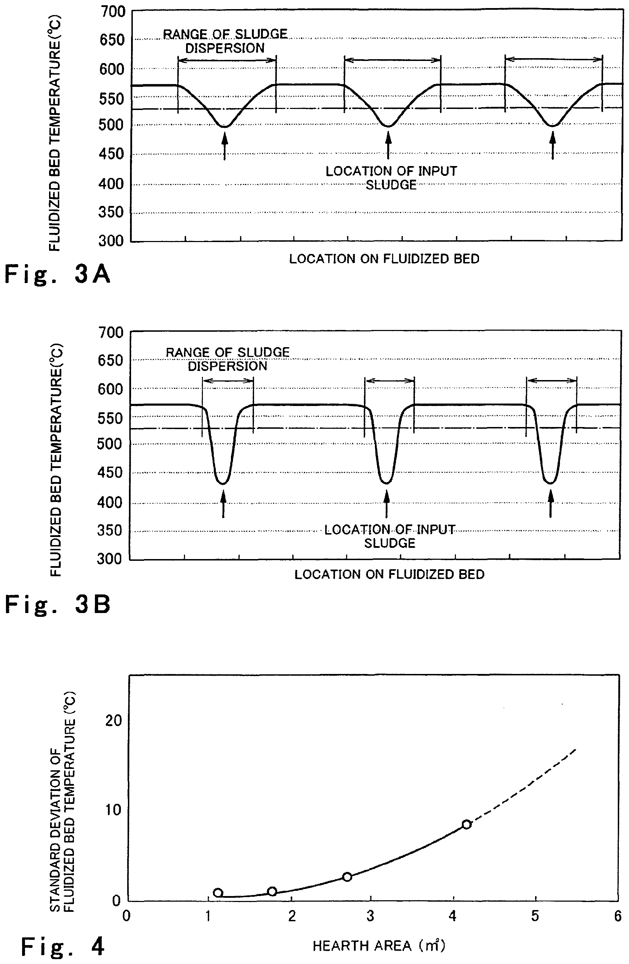

Results of simulations for the largest diffusion constant and the smallest diffusion constant are shown in Figs. 3A and 3B, respectively. In the simulation, it was assumed that the diffusion rate of the dewatered sludge in the longitudinal direction of the fluidized bed 1a is presumed to be infinity for the purpose of convenience, so that the influence by the difference in the diffusion rate over the horizontal direction and the influence by the evaporation rate of water in the dewatered sludge are considered. It can be seen from the comparison of Fig. 3A and Fig. 3B that smaller the diffusion constant provides narrower range for decreasing the temperature (sludge diffusion range) and also provides more considerable decrease of temperature in this range. In particular, looking at Fig. 3B for smaller diffusion constant, there are points locally exhibiting the bed temperature of lower than 450 degrees C, causing difficulty in the continuation of the pyrolysis reaction.

As described above, it is preferable to employ larger diffusion constant in the case of supplying the dewatered sludge, and a method considered as usable may be that the tip of the supplying port is squeezed to be used as a nozzle in order to supply finer dewatered sludge. However, this may possibly cause the dewatered sludge of high viscosity being plugged at the tip of the nozzle, and thus the tip of the supplying port cannot be easily squeezed. As described above, it is practically difficult to voluntarily change the diffusion constant in the case of supplying the dewatered sludge.

Then, the dewatered sludge was actually supplied to the gasification furnace from a single location, and the temperature measurements in the fluidized bed were conducted at multiple locations, and based on the standard deviation of the measurement results, the range influenced by the supply of the dewatered sludge was confirmed. Fig. 4 is a graphic diagram, showing the relation of standard deviation of the fluidized bed temperature over hearth area, under the condition that the average value of the fluidized bed temperature is constant. It can be understood according to Fig. 4 that the standard deviation of the fluidized bed temperature is increased as the hearth area is increased, upon the same average value of the fluidized bed temperature. More specifically, the range, in which the dewatered sludge supplied from a single location affects the temperature of the fluidized bed, can be found. According to these results, when the dewatered sludge is supplied to a single location, the hearth area must be equal to or smaller than 5 m², and the preferable hearth area is equal to or smaller than 3 m².

In other words, it was found that the supply of the dewatered sludge must be conducted by distributing the locations of the supply as at least one location per 5 m² for the gasification furnace having the hearth area of beyond 3 to 5 m², and preferably one location per 3 m². Thus, in the present embodiment, a plurality of supplying ports 82 are arranged above the gasification furnace 1 in, for example, cyclic or lattice-like pattern as schematically show in Fig. 2, such that the dewatered sludge transported by the sludge input device 81 is supplied by distributing the supply locations as a single location per 3 to 5 m² over the top plane of the fluidized bed 1a.

### - Operation of Gasification furnace -

In the next, method for operation for maintaining a temperature of the fluidized bed 1a in the gasification furnace 1 within an appropriate range will be described. While the parameters for controlling the temperature of the fluidized bed 1a are basically composed of the input amount of the wastes containing the dewatered sludge and the temperature and the flow rate of the fluidizing air as described above, the temperature and the flow rate of the fluidizing air are previously defined in order to ensure the disposal amount of the waste and the like per day in the present embodiment, and during the operation, the supply amount of the dewatered sludge is adjusted according to the fluidized bed temperature. When the lower calorific value of the wastes containing the dewatered sludge is excessively lower, the pulverizing coal is supplied as required.

The operation of such a gasification furnace 1 is conducted by the controller 90 depending on the operation of an operator. As have been described above in reference to Fig. 2, the controller 90 leastwise acquires inputs of a signal from a temperature sensor 91 for measuring a temperature of the fluidized bed 1a and a signal from a control-panel 92 of the operator, and the operations of the waste input device 4 and the sludge input device 81 are controlled according to the acquired signals to suitably adjust the input amount of the wastes containing the dewatered sludge. In addition, the controller 90 provides a control for the level of the opening of the bypass valve 42 of the gas air heater 41 to adjust the temperature of the fluidizing air, and also provides controls for the rotating speed of the blower 5 and the level of the opening of the damper 55 of the air supply path 5a to adjust the flow rate of the fluidizing air.

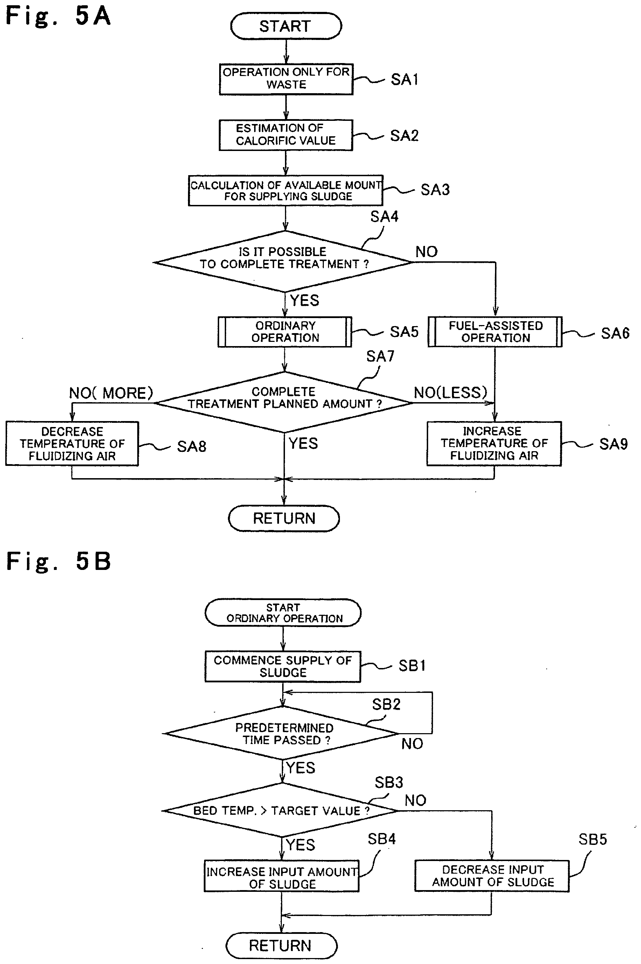

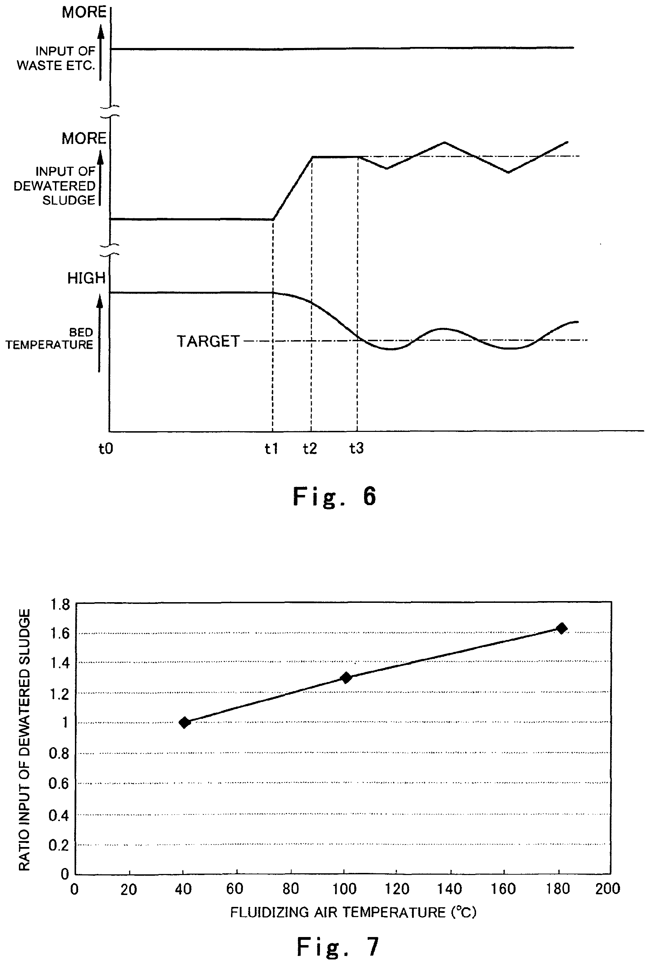

Hereinafter, the operation of the gasification furnace 1 will be described in detail in reference to Figs. 5 and 6. Fig. 5A shows a method for the operation of the gasification furnace 1 including an operation by an operator, and Fig. 5 B shows a procedure foe a control to adjust an input amount of the dewatered sludge in the case of the ordinary operation employing no assistant fuel. Also, Fig. 6 is a time chart, showing change of input amount for the waste and the dewatered sludge with corresponding change of the fluidized bed temperature in case of ordinary operation on a conceptual basis.

As an example, the lower calorific value of the wastes such as the waste and the like is investigated at a predetermined time in every morning for the waste treatment facility 100 of the present embodiment Since the waste and the like is crushed and is retained in the bunker 2a in the pit 2 as described above, the variation of the heat generation due to the type of the waste is reduced, but even the variation is still large, as compared with the dewatered sludge. Thus, when the mixed combustion for larger proportion of the dewatered sludge having higher water content causes the decrease in the temperature of the fluidized bed 1a, there is a concern that the temperature may be less than the lower limit required for the pyrolysis reaction (450 degrees C, for example), and thus the investigation is made.

More specifically, at a predetermined time in every morning, the operation of the sludge input device 81 is stopped by the command from the controller 90 according to the operation of the operator, and from this time, the input of the dewatered sludge is stopped until the predetermined time have passed. The operation of the waste input device 4 is still continued in this period of time, and therefore only the wastes such as waste and the like is supplied to the gasification furnace 1 (SA1: operation only for waste). As shown in time to to t1 in Fig. 6, the temperature of the fluidized bed 1a is elevated to the level higher than the ordinary target value (530 degrees, for example) during the operation only for waste, and the controller 90 receives a signal from the temperature sensor 91 for measuring the temperature of the waste and estimates the lower calorific value of the waste and the like (SA2).

The input amount of the waste and the like, the temperature and the flow rate of the fluidizing air, and the like, are employed for the estimated calculating of the amount of the heat generation, in addition to the fluidized bed temperature. In addition, the controller 90 calculates the maximum amount of the dewatered sludge that can be supplied simultaneously with this waste and the like on the basis of the estimated amount of the heat generation from this waste and the like (SA3: calculation of available mount for supplying sludge). More specifically, since the dewatered sludge has relatively uniform composition and property as compared with with waste and the like, the lower calorific value is previously obtained through a combustion test or the like to be stored in a memory of the controller 90. Then, on the basis of the lower calorific value of the dewatered sludge and the estimated value of the lower calorific value of the aforementioned waste and the like, the suitable proportion of the input amount of the dewatered sludge over the input amount of the waste and the like is calculated, so as to achieve the lower calorific value of the whole wastes containing both to be a predetermined value (1,000 kcal/kg, for example).

More specifically, upon the investigation in every morning of the lower calorific value of the waste and the like exhibiting relatively larger variation of the amount of the heat generation, it obtains the available amount of the supply of the dewatered sludge per unit time, which provides sufficient lower calorific value for the whole wastes containing the dewatered sludge and achieves the continuous operation of the gasification furnace 1 without a need for supplying an assistant fuel.

The available amount of the supply of the dewatered sludge thus obtained is compared with the planned amount of throughput of the dewatered sludge per time to achieve a determination on whether or not the treatment of all the planned amount of the dewatered sludge of is possible (SA4), and this determination result is displayed on a display of a control-panel for the operator. The operator who watches this conducts the ordinary operation without employing an assistant fuel (SA5) if the treatment of all the planned amount of is possible (YES in SA4), and on the other hand, if the treatment of all the planned amount of is not possible (NO in SA4), a fuel-assisted operation employing an assistant fuel is conducted (SA6).

The description of the ordinarily operation will be described, in which as shown in a subroutine of Fig. 5B, the controller 90 starts the operation of the sludge input device 81 while continuing the operation of the waste input device 4 to commence the input of the dewatered sludge (SB1). Then, as shown in the time t1 to t2 of Fig. 6 when the increased amount of the input reaches to the amount that fits to the amount of the planned throughput per time (time t2), the temperature of the fluidized bed 1a is stabilized with a slight delay (time t3). The controller 90 evaluates the passage of the predetermined time required to reach to this condition (SB2), and then the measured (for example, employing moving average) value of the bed temperature is compared with the target value that is previously defined (SB3).

The appropriate range for the temperature of the fluidized bed 1a is, as an example, around 500 to 600 degrees C, and the pyrolysis reaction can be maintained if the temperature is not lower than 450 degrees C, taking the fact into consideration that the temperature at the locations of supplying the dewatered sludge is decreased as compared with other locations as described above, the control target value of the bed temperature is set to around 530 degrees C, for example. Then, if the bed temperature is higher than the target value (YES in SB3), the input amount of the dewatered sludge is increased according to the temperature deviation (SB4). On the other hand, if the bed temperature is lower than the target value (NO in SB3), the input amount of the dewatered sludge is decreased (SB5). In addition to above, if the bed temperature is within a predetermined range including the target value, the input amount of the dewatered sludge is maintained.

Since the dewatered sludge contains water at high water content, the bed temperature also rapidly changes by increasing and decreasing the input amount thereof as described above, and is attained to maintained at generally around the target value (after time t3 of Fig. 6). Of course, it is not limited to conduct the adjustment of only the input amount of the dewatered sludge, and in addition to this, or instead of this, the adjustment of the input amount of the wastes of the waste and the like may be conducted. Since the gasification furnace 1 is ordinarily operated in the state where the air ratio is smaller than 1, the increased input amount of the waste and the like provides decreased fluidized bed temperature, depending on the heat capacity. However, since the effect of the temperature adjustment by the change of the input amount of the dewatered sludge is high as described above, it is preferable to maintain the input amount of the waste and the like at a constant amount and to ensure processing the planned disposal amount per day.

In addition to above, when the operator selects the fuel-assisted operation (SA6 in the flow of Fig. 5A), the controller 90 calculates the supply amount of the pulverizing coal per time so that the lower calorific value of the whole wastes and the additional pulverizing coal is equal to or higher than a predetermined value (1,000 kcal/kg, for example), and the feeding device 7 is operated based on the calculated result Then, similarly as in the above-described ordinary operation, the input amount of the dewatered sludge is increased and decreased according to the measured value of the temperature of the fluidized bed 1a. It may alternatively employ a method for increasing and decreasing the supply amount of the pulverizing coal depending on the bed temperature, while the input amount of this dewatered sludge is maintained constant.

Then, the operation is continued for a predetermined period to achieve the treatment generally the planned amount of the wastes such as the waste and the like, and after that, the controller 90 determines whether or not the planned amount of the dewatered sludge is treated (SA7 in Fig. 5A). The disposal amount of the dewatered sludge is obtained by integrating the disposal amount per time based on the operation of the sludge input device 81. If the actual disposal amount is larger than the planned amount, the level of the temperature decrease of the fluidizing air is calculated according to the deviation of the amount, and the bypass valve 42 is opened to increase the flow rate of the fluidizing air bypassing the gas air heater 41. More specifically, the operating condition of the gasification furnace 1 is changed so as to decrease the temperature of the fluidizing air (SA8), and returns.

More specifically, in order to maintain the state of fluidization in the fluidized bed 1a, flow rate of the fluidizing air is not changed, but the temperature thereof is adjusted to maintain the fluidized bed temperature and ensure certain disposal amount of the waste and the like and the dewatered sludge.
The actual amount of throughput of the waste and the like and the dewatered sludge is generally as planned, so that the amount of the generated pyrolysis gas is not excessively increased, and it is preferable to maintain the negative pressure state in the interior of the gasification furnace 1.

On the other hand, if the actual amount of throughput of the dewatered sludge is lower than the planned throughput, an amount of temperature increase required for the fluidizing air temperature is calculated according to the deviation of the throughput, and then the bypass valve 42 is closed to reduce the flow of the bypass air of the gas air heater 41. In addition, after the fuel-assisted operation, the amount of the heat generation by the combustion of the pulverizing coal serving as the assistant fuel is calculated by the supply amount of the pulverizing coal, and in order to elevate the temperature of the fluidizing air corresponding to this amount of the heat generation, the bypass valve 42 is closed. More specifically, the operating condition for the gasification furnace 1 is changed so as to increase the temperature of the fluidizing air (SA9), and then it makes return.

As described above, according to the waste treatment facility 100 of the present embodiment, the gasification furnace 1 of fluidized bed type is provided in vicinity of the existing cement production facility 200, and the pyrolysis gas from the wastes containing the dewatered sludge is supplied with the char and the ash to the calciner 20 for cement, and on the other hand, the waste heat from the air quenching cooler 40 is utilized to elevate the temperature of the fluidizing air of the gasification furnace 1 , such that, even if the mixed combustion for the wastes containing larger amount of the dewatered sludge having higher water content is conducted, the temperature of the fluidized bed 1a of the gasification furnace 1 can be maintained within the preferable range.

Moreover, the heat for elevating the temperature of the fluidizing air to be utilized for maintaining the temperature of the fluidized bed 1a in the gasification furnace 1 is transferred to the gas transport path 6, together with the pyrolysis gas and water vapor generated in the gasification furnace 1 to return to the cement production facility 200 again, and therefore this is significantly efficient. In other words, the heat generated in the cement production facility 200 is profitably utilized as effectively as possible to maintain the temperature of the fluidized bed 1a of the gasification furnace 1, so that larger amount of the dewatered sludge than the conventional case can be treated simultaneously with treating the waste and the like.

The graph of Fig. 7 shows how much amount of the dewatered sludge supplied to the gasification furnace 1 can be increased by elevating the temperature of the fluidizing air. As an example, in the case of employing no assistant fuel, when the temperature of the fluidizing air is around 40 degrees C, the dewatered sludge can be added at a proportion of equal to or slightly more than 15 % of the waste and the like. Taking the ratio of the input amount of the dewatered sludge over the amount of the waste and the like as a reference (1), it is found that the higher temperature of the fluidizing air provides the larger amount of the dewatered sludge that can be supplied as shown in the graph, and for example 180 degrees C provides beyond 1.6 times, and therefore the dewatered sludge of about 25 % of the of the waste and the like can be treated.

In addition, the present embodiment is configured to supply an assistant fuel such as the pulverizing coal and the like as required, so that, even if the waste and the like having significantly smaller lower calorific value is accumulated, such a waste can be treated simultaneously with the dewatered sludge, and thus an obstruction for the operation of the gasification furnace 1 is avoided. Moreover, the amount of the heat generation from waste and the like to be supplied is investigated every day, and the amount of the dewatered sludge that can be treated simultaneously with such waste is calculated, and no assistant fuel is employed if it is not needed, and therefore the consumption thereof can be reduced at minimum level.

Further, the input amount of the dewatered sludge is adjusted on the basis of the measured value of the temperature in order to maintain the temperature of the fluidized bed 1a during the operation of the gasification furnace 1, and the change of the disposal amount of the dewatered sludge resulted from this is confirmed after the end of the operation for the predetermined term, and after that, the temperature of the fluidizing air is adjusted so as to achieve the treatment of the planned amount. That is to say, basically, while an appropriate state of the fluidized bed 1a is achieved without changing the supply amount of the fluidizing air to the gasification furnace 1, the required waste disposal amount and dewatered sludge disposal amount can be achieved without considerably changing the disposal amount of the wastes containing the dewatered sludge for the predetermined term.

In addition to above, it is not necessary to maintain the constant flow rate of the fluidizing air, the flow rate may be changed on some level, as well as changing the temperature. In this case, for example, the increased flow rate of the fluidizing air promotes the combustion, so that the temperature of the fluidized bed 1a tends to be increased. As described above, there are multiple parameters for the control of the operating state of the gasification furnace 1, such as, in addition to the input amount of the wastes containing the dewatered sludge, the temperature and the flow rate of the fluidizing air, and further the supply amount of the assistant fuel, which allows enhanced flexibility of the control, so that more preferable state of the gasification furnace 1 can be achieved.

### - Second Embodiment -

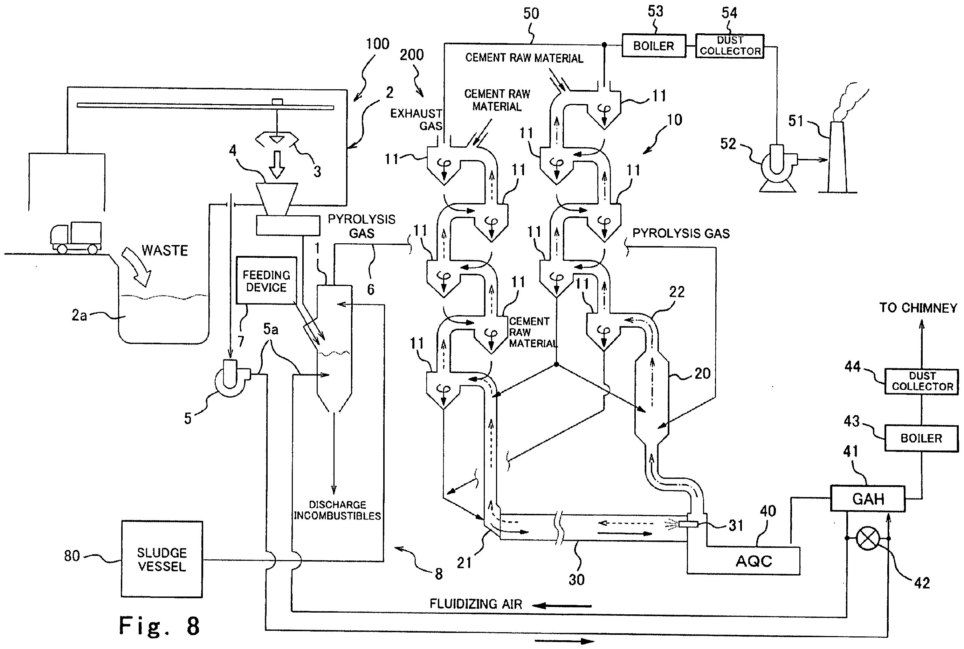

Next, a waste treatment facility and a cement production facility according to second embodiment of the present invention will be described in reference to Fig. 8. Fig. 8 corresponds to Fig. 1 of the above-described first embodiment While the configuration of the suspension preheater 10 and the calciner 20 in the cement production facility 200 in the present embodiment are different from those in first embodiment, the calciner 20 is the same as one employed in first embodiment except that it has no air inlet, and therefore the identical reference numeral 20 is employed. The same reference numeral is also referred to the same member having same configuration except the above, and the description thereof is not presented.

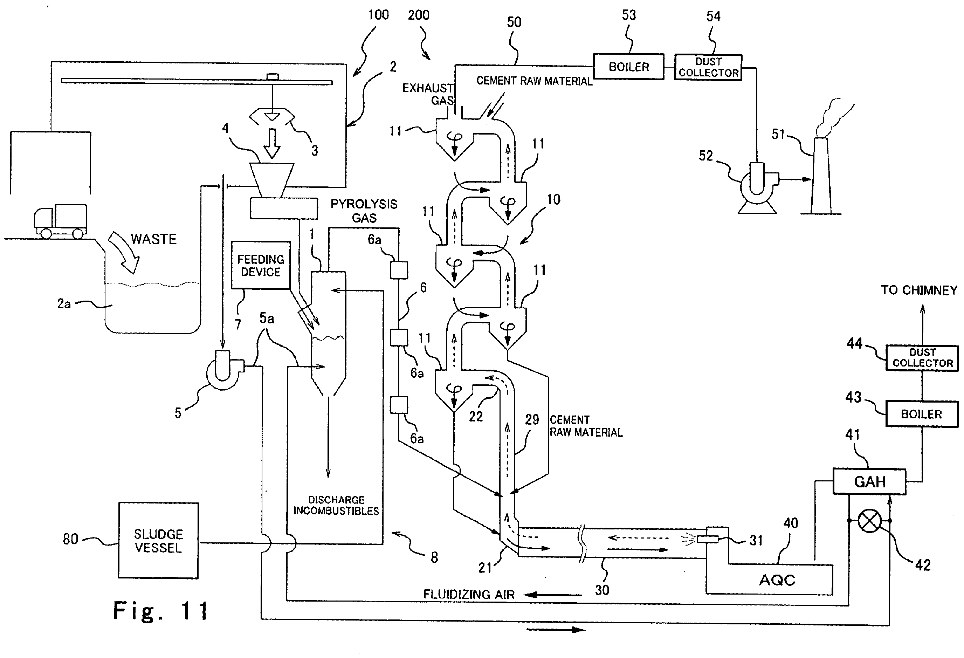

In addition, since a portion of the gas transport line 6 is hidden behind the suspension preheater 10 in Fig. 11, the illustration of the ejector device 6a is omitted, and similarly, while the illustration of the bypass line 60 is also omitted for the illustrative convenience, the gas transport line 6 is provided with a plurality of ejector devices 6a, and in addition, also includes the bypass line 60, the cooler 61, the cyclone 62 and the like, similarly as in first embodiment.

Further, in the cement production facility 200 of this second embodiment, the suspension preheater 10 is divided into two routes, and the cyclones 11 of, as an example five levels, are included in each of the routes. The left side route shown in the diagram is configured that the kiln exhaust gas is blasted from the lower level, and this is similar as in first embodiment, except that the calciner 20 is not provided. On the other hand, the right side route shown in the diagram is configured to have the calciner 20, where not the kiln exhaust gas, but the cooler exhaust gas of high temperature, is entered from the air quenching cooler 40.

The cooler exhaust gas is entered into the bottom end of the calciner 20 similarly as the kiln exhaust gas in first embodiment to form the blowing-up jet flow (indicated in the diagram with the alternate-long-and-short dash line). This cooler exhaust gas is mixed with the pyrolysis gas introduced in the calciner 20 to blow up the cement raw materials while burning thereof, reaching to the cyclone 11 of the lowermost level from the upper duct 22. Then, this rises through the levels of the cyclones 11 step by step to flow out from the cyclone 11 of the uppermost level to the exhaust gas line 50.

The lower section of the calciner 20 is configured to be supplied with the cement raw materials from the cyclone 11 similarly as in first embodiment, though an illustration of details is omitted, and the gas inlet is provided for introducing the pyrolysis gas from the gasification furnace 1, but no air inlet 25 for combusting thereof is provided. This is because the cooler exhaust gas blowing up through the calciner 20 contains much amount of oxygen as described above, unlikely as the case of the kiln exhaust gas.

The structure of the calciner 20 is the same as first embodiment except this feature, and the pyrolysis gas introduced in the calciner 20 is mixed with the cooler exhaust gas blowing up to achieve sufficient combustion. This combustion achieves the elevated temperature of the cooler exhaust gas rising to 900 degrees C or higher, which accelerate the calcining (decarboxylation) of the blown-up cement raw materials.

And, the temperature of the fluidizing air for supplying to the gasification furnace 1 of the waste treatment facility 100 is elevated by utilizing the waste-heat from the air quenching cooler 40 in the second this embodiment, so that even if the mixed combustion of the wastes of waste and the like with relatively larger amount of the dewatered sludge is carried out, the temperature of the fluidized bed 1a can be maintained within an appropriate range. More specifically, even if the cement production facility 200 configured to supply the cooler exhaust gas to the calciner 20 is installed in vicinity of the waste treatment facility 100 as in the present second embodiment, similar advantageous effects as obtained in first embodiment is also obtained.

### - Modified Embodiment -

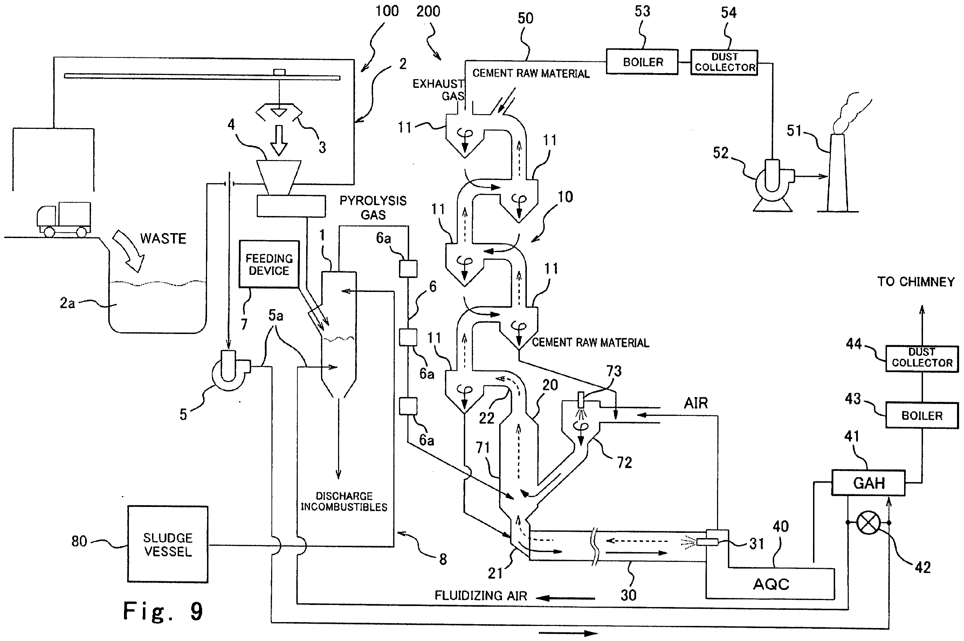

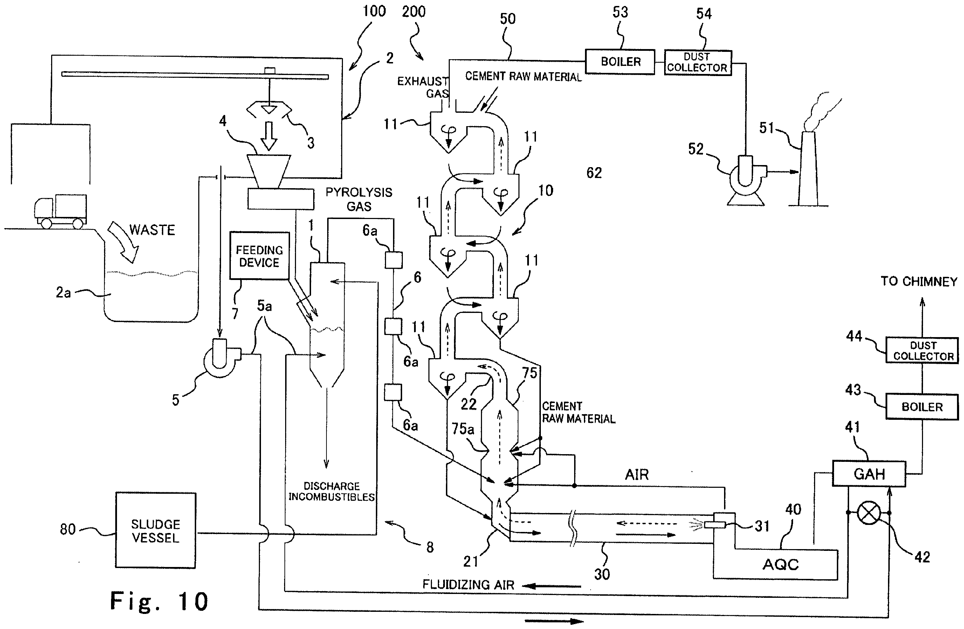

Fig. 9 and Fig. 10 show modified embodiments of first embodiment, respectively having configurations of different calciners in the cement production facility 200. In addition, Fig. 11 shows an embodiment having no calciner. Since all of these modified embodiments have configurations that are similar to the above described first embodiment except the configuration related to the calciner, the identical numeral is referred to the identical member and the description thereof is omitted.

First of all, the calciner 70 of the modified embodiment shown in Fig. 9 is generally similar as employed in first embodiment, but is provided with a mixing chamber 71 provided in the introduction section of the rotary kiln 30 and a swirling calcining chamber 72 in communication with the lower section thereof, and a combustion device 73 is disposed in this swirling calcining chamber 72 to blast a combustion gas of high temperature created by the combustion of coal, natural gas, heavy oil and the like. As shown in the diagram, a cooler exhaust gas (air) of high temperature is introduced as a swirling flow from the air quenching cooler 40 to the swirling calcining chamber 72, and preheated cement raw materials are supplied from the cyclone 11 before the lowermost level.

The cement raw materials are subjected to the combustion gas from the combustion device 73 to move to the mixing chamber 71 while being calcined, where the raw materials are blown up toward the upper side by the jet flow of the kiln exhaust gas from underneath. More specifically, the flow of the combustion gas containing the cement raw materials is interfluent with the flow of the kiln exhaust gas in the mixing chamber 71, and both are rising upward while being mixed well. The cement raw materials are sufficiently calcined while these are entrained with the upward flow to be blown up, and are transported to the cyclone 11 of the lowermost level from the outlet at the top of the mixing chamber 71 through a duct.
In addition to above, the pyrolysis gas from the gasification furnace 1 may be introduced between the entrance of the rotary kiln 30 and the exit of the mixing chamber 71, or between the swirling calciner 72 and the mixing chamber 71.

On the other hand, a calciner 75 of a modified embodiment shown in Fig. 10 has a structure generally similar to that employed in first embodiment and is provided in the introduction section of the rotary kiln 30 so as to extend toward the longitudinal direction, but an annular bundled unit 75a is created in a section at the substantially center of the longitudinal extension, and this bundled unit 75a is configured to supply air to the inside of the calciner 75.

More specifically, it is configured that the cooler exhaust gas of high temperature from the air quenching cooler 40 is introduced as a swirling flow to the lower section of the calciner 75 similarly as in the above described configuration of first embodiment, but a portion of the cooler exhaust gas is guided to the aforementioned bundled unit 75a through the branched passageway from the supply passageway of this cooler exhaust gas to be eventually introduced to the interior of the calciner 75 through an inlet created here. The portion of the cooler exhaust gas introduced in this way is supplied as air for recombustion into the jet flow of the kiln exhaust gas blowing up through the calciner 75. In the present modified embodiment, the pyrolysis gas from the gasification furnace 1 may also be introduced between the entrance of the rotary kiln 30 and the exit of the calciner 75.

Next, no calciner is provided in a modified embodiment shown in Fig. 11, and the lower duct 21 connected to the inlet of the rotary kiln 30 is linked to the upper duct 22 connected to the cyclone 11 of the lowermost level in the suspension preheater 10 via a rising tube 29. The cement raw materials and the pyrolysis gas from the gasification furnace 1 are supplied respectively through this rising tube 29, and then are blown up by the jet flow of the kiln exhaust gas. The pyrolysis gas reacts with oxygen contained in the kiln exhaust gas to be burned within the rising tube 29 and the suspension preheater 10.

### - Other Embodiment -

The descriptions of the respective first and second embodiments and modified embodiments thereof described above are for illustrations only, and it is not intended to limit the scope of the present invention, application thereof or the use thereof. For example, while the amount of the heat generation from waste and the like is investigated every day, and the proportion of the dewatered sludge that can be processed simultaneously with such a waste is identified and then the input of the dewatered sludge is started in the respective above-described embodiments, the amount of the heat generation from the accumulated waste and the like is not very rapidly changed, and therefore the investigation of the amount of the heat generation need not be carried out every day.

For example, the amount of the heat generation from the waste and the like may be investigated every two to three days or every week or so, or the investigation may alternatively be made at irregular intervals, which may be determined based upon the disposal amount of the dewatered sludge, or upon the temperature of the fluidizing air changed on the basis thereof

In addition, it is not necessary to supply the dewatered sludge after investigating the amount of the heat generation from waste and the like, and for example, the following method for operation may be employed. More specifically, at first, the temperature of the fluidized bed 1a is measured while supplying only the waste and the like, and then the input amount of the wastes is suitably adjusted on the basis of this measurement result so as to provide the bed temperature to be higher than the target temperature. Thereafter, the temperature of the fluidized bed 1a is measured while the dewatered sludge is also supplied, and then the input amount of the dewatered sludge is suitably adjusted on the basis of this measurement result so as to provide the bed temperature to be equivalent to the target temperature.

Further, the amount of the heat generation from the accumulated waste and the like may be significantly high, depending upon the local community, and the situation where the total lower calorific value from the whole wastes containing the planned amount of the dewatered sludge is well over 1,000 kcal/kg is considered. If it is such a local community, the feeding device 7 for the assistant fuel may be omitted from the respective embodiments. Similarly, if it is installed in a local community where only necessary to treat the wastes containing smaller amounts of chlorine component and alkali components, the bypass line 60 may be omitted from the respective embodiments.

Also, while the aforementioned respective embodiments are configured to guide the exhaust gas from the air quenching cooler 40 to the gas air heater 41, the present invention is not limited thereto, and for example, it may be installed in the side of the upstream of the gas cooler 53 in the exhaust gas line 50, and it is only necessary to utilize the waste heat of the cement production facility 200.

Also similarly, a dryer device for drying the dewatered sludge by utilizing the waste heat of the cement production facility 200 before supplying to the gasification furnace 1 may be included. Drying of the dewatered sludge promotes increased lower calorific value, which is profitable for maintaining the temperature of the fluidized bed 1a. Moreover, this helps reducing the water content of the dewatered sludge, and therefore the local temperature decrease caused in the fluidized bed 1a when this is supplied can be inhibited.

However, the heat utilized in the dewatering of the dewatered sludge is discharged to the outside of the system with water vapor, and does not return to the cement production facility 200. In this point of view, it is preferable to employ a heat source of dryer of lower temperature than the gas air heater 41 or the like that is employed for elevating the temperature of the fluidizing air, and for example, may be disposed in the side of the downstream of a boiler 43, through which the cooler exhaust gas, which has passed through the gas air heater 41, flows.

In addition, while the aforementioned respective embodiments are configured to utilize the negative pressure of the side of the cement production facility 200 to transport the pyrolysis gas from the gasification furnace 1 and no air blower is disposed in the gas transport line 6, a blower may alternatively be provided there. In addition, the ejector device 6a of gas transport line 6 may be omitted.

Furthermore, concerning the structures of the gasification furnace 1 in the waste treatment facility 100 and the kiln (burning furnace) of the cement production facility 200 are not limited to that employed in the above-described respective embodiments. For example, the burning furnace for cement is not limited to the rotary kiln 30, and, for example, it may be a fluidized bed kiln.

### Industrial Applicability

According to the present invention, larger amount of the dewatered sludge than the conventional case can be mixed in the wastes such as waste and the like to conduct mixed combustion in the gasification furnace of the waste treatment facility installed in vicinity of the existing cement production facility to achieve a sanitary processing, such that the industrial applicability is considerably high.

## Claims

1. A waste treatment facility (100) suitable for being installed in vicinity of a cement production facility (200), comprising:
a fluidized bed type gasification furnace (1) configured to gasify wastes to generate pyrolysis gas; a gas transport path (6) suitable for transporting the pyrolysis gas generated in said gasification furnace (1) to a preheater (10) or a calciner (20) for cement in said cement production facility (200);
an air feeding path (5a) configured to feed fluidizing air to a fluidized bed (1a) of said gasification furnace (1);
a damper (55) and a blower (5) provided in said air feeding path (5a);
a temperature elevating device (41) configured to elevate the temperature of fluidizing air to be supplied to said gasification furnace by utilizing waste heat of said cement production facility;
a supplying device (4, 81) configured to supply a dewatered sludge which is contained in said wastes and other wastes separately to said gasification furnace (1) ; and
a temperature sensor (91) for measuring a temperature of said fluidized bed (1a); and
a controller (90), configured to receive a signal from the temperature sensor (91), **characterized in that**
the pyrolysis gas is containing entrained char and ash,
said supplying device (4, 81) is configured to supply the dewatered sludge to a fluidized bed (1a) in said gasification furnace (1) from multiple dispersed locations of the upper side thereof,
said controller (90) controls:
a level of opening of a damper (55) and a rotating speed of said blower (5) to adjust a flow rate of fluidizing air within predetermined rate; and
an opening of a bypass valve (42) to adjust a flow rate of fluidizing air for creating bypass said temperature elevating device (41) to adjust a temperature of fluidizing air and
said supplying device (4,81) to adjust an input amount of at least one of said dewatered sludge and other wastes so that the temperature of said fluidized bed (1a) measured by said temperature sensor (91) may be maintained within a range from 500 to 600°·C.

2. The waste treatment facility as set forth in claim 1,
wherein said gasification furnace (1) comprises a fuel supply device (7) configured to supply assistant fuel to the fluidized bed (1a).

3. The waste treatment facility as set forth in claim 2,
wherein said fuel supply device (7) supplies a solid assistant fuel having mean particle diameter of 0.1 to 3 mm to a freeboard of the upper side of the fluidized bed (1a).

4. The waste treatment facility as set forth in any one of claims 1 to 3, further comprising
a dryer configured to dry said dewatered sludge by utilizing waste heat of the cement production facility before supplying it to the gasification furnace (1).

5. A method of treating wastes containing a dewatered sludge, by a waste treating facility (100) as set forth in any preceding claim, comprising:
generating a pyrolysis gas by gasifying said wastes with a gasification furnace (1) of fluidized bed type installed in vicinity of a cement production;
elevating a temperature of fluidizing air supplying to said gasification furnace by utilizing waste heat of said cement production facility (200);
supplying said dewatered sludge and other wastes separately to said gasification furnace,
adjusting a flow rate of fluidizing air within predetermined rate, a temperature of fluidizing air, and an input amount of at least one of said dewatered sludge and other wastes to maintain the temperature of said fluidized bed (1a) within a range from 500 to 600°·C,
wherein said dewatered sludge is supplied to said fluidized bed (1a) in said gasification furnace from multiple dispersed locations of the upper side thereof; and
transporting the pyrolysis gas generated in said gasification furnace (1) to a preheater (10) or a calciner (20) for cement in said cement production facility (200), the gas containing entrained char and ash.

6. The method of treating wastes as set forth in claim 5,
wherein a ratio of the input amount of said dewatered sludge over other wastes is adjusted such that a lower calorific value of the whole wastes containing these is equal to or higher than a predetermined value.

7. The method of treating wastes as set forth in claim 6, further comprising:
obtaining and storing the lower calorific value of the dewatered sludge before supplying it in said gasification furnace in advance;
supplying the wastes except the dewatered sludge to said gasification furnace (1),
measuring the temperature of the fluidized bed (1a),
estimating the lower calorific value of the wastes except said dewatered sludge on the basis of this measurement result; and
adjusting the proportion of the input amounts of the dewatered sludge and other wastes on the basis of the estimated value and the lower calorific value of said stored de-watered sludge, such that the lower calorific value of the whole wastes is equal to or higher than said predetermined value.

8. The method of treating wastes as set forth in claim 7, further comprising:
measuring a temperature of the fluidized bed (1a) while supplying the dewatered sludge and other wastes to said gasification furnace (1); and
adjusting the input amount of said dewatered sludge on the basis of this measurement result such that the temperature of the fluidized bed (1a) approaches to a target value.

9. The method of treating wastes as set forth in claim 5, further comprising:
measuring the temperature of the fluidized bed (1a) while supplying the wastes except the dewatered sludge to said gasification furnace (1);
adjusting the input amount of said wastes on the basis of this measurement result such that the temperature of the fluidized bed (1a) is higher than a target value;
measuring the temperature of the fluidized bed (1) while supplying the dewatered sludge to said gasification furnace (1); and
adjusting the input amount of said dewatered sludge on the basis of this measurement result such that the temperature of the fluidized bed (1a) is equivalent to said target value.

10. The method of treating wastes as set forth in anyone of claims 5 to 9,
wherein the input amount of the whole wastes containing said dewatered sludge is adjusted to maintain a negative pressure in the interior of the gasification furnace (1).

## Patentansprüche

1. Anlage (100) zur Abfallverarbeitung, die in der Nähe einer Anlage (200) zur Zementproduktion installiert werden kann, umfassend:
einen Wirbelschicht-Vergasungsofen (1), der dazu konfiguriert ist, Abfälle zu vergasen, um ein Pyrolysegas zu erzeugen;
einen Gastransportweg (6), der dazu geeignet ist, das in dem Vergasungsofen (1) erzeugte Pyrolysegas an einen Vorheizer (10) oder eine Kalziniereinrichtung (20) für Zement in der Anlage (200) zur Zementproduktion zu transportieren;
einen Luftzufuhrweg (5a), der dazu konfiguriert ist, Wirbelluft in eine Wirbelschicht (1a) des Vergasungsofens (1) zuzuführen;
einen Schieber (55) und ein Gebläse (5), die in dem Luftzufuhrweg (5a) zur Verfügung gestellt sind;
eine Temperaturerhöhungsvorrichtung (41), die dazu konfiguriert ist, die Temperatur von Wirbelluft, die in den Vergasungsofen zugeführt werden soll, mittels Verwendung von Abwärme der Anlage zur Zementproduktion zu erhöhen;
eine Zufuhrvorrichtung (4, 81), die dazu konfiguriert ist, einen in diesen Abfällen enthaltenen entwässerten Schlamm und andere Abfälle getrennt voneinander an den Vergasungsofen (1) zuzuführen;
einen Temperatursensor (91) zum Messen der Temperatur der Wirbelschicht (1a); und
eine Steuerung (90), die dazu konfiguriert ist, ein von dem Temperatursensor (91) stammendes Signal zu empfangen, **dadurch gekennzeichnet, dass**:
das Pyrolysegas mitgerissene Kohle und Asche enthält,
die Zufuhrvorrichtung (4, 81) dazu konfiguriert ist, den entwässerten Schlamm aus mehreren verstreuten Stellen auf der Oberseite des Vergasungsofens in eine Wirbelschicht (1a) in dem Vergasungsofen (1) zuzuführen,
die Steuerung (90) steuert:
den Öffnungsgrad des Schiebers (55) und die Drehgeschwindigkeit des Gebläses (5), um eine Durchflussrate der Wirbelluft innerhalb einer vorbestimmten Rate einzustellen;
die Öffnung eines Umgehungsventils (42), um die Durchflussrate der Wirbelluft derart anzupassen, dass die Temperaturerhöhungsvorrichtung (41) umgangen werden kann, um die Temperatur der Wirbelluft anzupassen, und
die Zufuhrvorrichtung (4, 81), um eine Einlassmenge von entwässertem Schlamm und/oder anderen Abfällen derart anzupassen, dass die von dem Temperatursensor (91) gemessene Temperatur der Wirbelschicht (1a) in einem Bereich von 500 bis 600 °C gehalten werden kann.

2. Anlage zur Abfallverarbeitung gemäß Anspruch 1,
wobei der Vergasungsofen (1) eine Brennstoffzufuhrvorrichtung (7) umfasst, die dazu konfiguriert ist, der Wirbelschicht (1a) einen Hilfsbrennstoff zuzuführen.

3. Anlage zur Abfallverarbeitung gemäß Anspruch 2,
wobei die Brennstoffzufuhrvorrichtung (7) einen festen Hilfsbrennstoff mit einem mittleren Partikeldurchmesser von 0,1 bis 3 mm an ein Freibord der Oberseite der Wirbelschicht (1a) zuführt.

4. Anlage zur Abfallverarbeitung gemäß einem der Ansprüche 1 bis 3, die weiterhin umfasst:
einen Trockner, der dazu konfiguriert ist, mittels Verwendung von Abwärme der Anlage zur Zementproduktion den entwässerten Schlamm vor der Zufuhr in den Vergasungsofen (1) zu trocknen.

5. Verfahren zur Verarbeitung von entwässerten Schlamm enthaltenden Abfällen mit Hilfe einer Anlage (100) zur Abfallverarbeitung gemäß einem der vorangegangenen Ansprüche, wobei das Verfahren umfasst:
Erzeugen eines Pyrolysegases durch Vergasen der Abfälle mit einem Wirbelschicht-Vergasungsofen (1), der in der Nähe einer Anlage zur Zementproduktion installiert ist;
Erhöhen der Temperatur von Wirbelluft, die in den Vergasungsofen zugeführt werden soll, mittels Verwendung von Abwärme der Anlage (200) zur Zementproduktion;
Zuführen des entwässerten Schlamms und der anderen Abfälle getrennt voneinander in den Vergasungsofen,
Anpassen der Durchflussrate der Wirbelluft innerhalb eines vorbestimmten Bereichs, der Temperatur der Wirbelluft und der Einlassmenge des entwässerten Schlamms und/oder der anderen Abfälle derart, dass die Temperatur der Wirbelschicht (1a) in einem Bereich von 500 bis 600 °C gehalten werden kann,
wobei der entwässerte Schlamm aus mehreren verstreuten Stellen auf der Oberseite des Vergasungsofens in die Wirbelschicht (1a) in dem Vergasungsofen zugeführt wird; und
Transportieren des in dem Vergasungsofen (1) erzeugten Pyrolysegases an einen Vorheizer (10) oder eine Kalziniereinrichtung (20) für Zement in der Anlage (200) zur Zementproduktion, wobei das Gas mitgerissene Kohle und Asche enthält.

6. Verfahren zur Abfallverarbeitung gemäß Anspruch 5,
wobei das Verhältnis der Einlassmenge von entwässertem Schlamm zu anderen Abfällen derart angepasst wird, dass ein unterer Heizwert der gesamten diese enthaltenden Abfälle größer oder gleich einem vorbestimmten Wert ist.

7. Verfahren zur Abfallverarbeitung gemäß Anspruch 6, wobei das Verfahren weiterhin umfasst:
Erhalten und Speichern des unteren Heizwerts des entwässerten Schlamms im Vorhinein vor der Zufuhr in den Vergasungsofen;
Zuführen der Abfälle ausgenommen den entwässerten Schlamm an den Vergasungsofen (1),
Messen der Temperatur der Wirbelschicht (1a),
Schätzen des unteren Heizwerts der Abfälle ausgenommen den entwässerten Schlamm auf der Basis dieses Messergebnisses; und
Anpassen des Anteils der Einlassmengen an entwässertem Schlamm und anderen Abfällen auf der Basis des geschätzten Wertes und des unteren Heizwerts des gespeicherten entwässerten Schlamms derart, dass der untere Heizwert der gesamten Abfälle größer oder gleich einem vorbestimmten Wert ist.

8. Verfahren zur Abfallverarbeitung gemäß Anspruch 7, wobei das Verfahren weiterhin umfasst:
Messen der Temperatur der Wirbelschicht (1a), während der entwässerte Schlamm und andere Abfälle in den Vergasungsofen (1) zugeführt werden; und
Anpassen der Einlassmenge des entwässerten Schlamms auf der Basis des Messergebnisses derart, dass die Temperatur der Wirbelschicht (1a) sich einem Zielwert annähert.

9. Verfahren zur Abfallverarbeitung gemäß Anspruch 5, wobei das Verfahren weiterhin umfasst:
Messen der Temperatur der Wirbelschicht (1a), während die Abfälle ausgenommen den entwässerten Schlamm in den Vergasungsofen (1) zugeführt werden;
Anpassen der Einlassmenge der Abfälle auf der Basis des Messergebnisses derart, dass die Temperatur der Wirbelschicht (1a) höher als ein Zielwert ist;
Messen der Temperatur der Wirbelschicht (1a), während der entwässerte Schlamm in den Vergasungsofen (1) zugeführt werden; und
Anpassen der Einlassmenge des entwässerten Schlamms auf der Basis des Messergebnisses derart, dass die Temperatur der Wirbelschicht (1a) gleich dem Zielwert ist.

10. Verfahren zur Abfallverarbeitung gemäß einem der Ansprüche 5 bis 9, wobei die Einlassmenge der gesamten, den entwässerten Schlamm enthaltenden Abfälle derart angepasst wird, dass ein Unterdruck im Inneren des Vergasungsofens (1) aufrecht erhalten wird.

## Revendications

1. Installation de traitement de déchets (100) apte à être installée à proximité d'une installation de production de ciment (200), comprenant :
un four de gazéification à lit fluidisé (1) conçu pour gazéifier les déchets afin de produire un gaz de pyrolyse,
une voie de transport de gaz (6) apte à transporter le gaz de pyrolyse produit dans ledit four de gazéification (1) vers un dispositif de préchauffage (10) ou un four de calcination (20) du ciment présent dans ladite installation de production de ciment (200),
une voie d'alimentation en air (5a) conçue pour apporter de l'air de fluidisation à un lit fluidisé (1a) dudit four de gazéification (1),
un registre (55) et une soufflante (5) prévus dans ladite voie d'alimentation en air (5a),
un dispositif élévateur de température (41) conçu pour élever la température de l'air de fluidisation apporté audit four de gazéification en exploitant la chaleur perdue de ladite installation de production de ciment,
un dispositif d'apport (4, 81) conçu pour apporter séparément audit four de gazéification (1) des boues déshydratées, contenues dans lesdits déchets, et d'autres déchets, et
un capteur de température (91) destiné à mesurer la température dudit lit fluidisé (1a) ; et
un organe de commande (90), conçu pour recevoir un signal issu du capteur de température (91), **caractérisé en ce que**
le gaz de pyrolyse contient des résidus de carbonisation et cendres entraînés,
ledit dispositif d'apport (4, 81) est conçu pour apporter les boues déshydratées à un lit fluidisé (1a) présent dans ledit four de gazéification (1), à partir d'emplacements multiples dispersés sur le côté supérieur de celui-ci, et
ledit organe de commande (90) régule :
le niveau d'ouverture du registre (55) et la vitesse de rotation de ladite soufflante (5) afin de régler le débit de l'air de fluidisation dans une plage prédéterminée,
l'ouverture d'une soupape de dérivation (42) afin de régler le débit de l'air de fluidisation pour créer une dérivation dudit dispositif élévateur de température (41) pour régler la température de l'air de fluidisation, et
ledit dispositif d'apport (4, 81) pour régler la quantité desdites boues déshydratées et/ou des autres déchets entrants de manière à maintenir la température dudit lit fluidisé (1a), mesurée par ledit capteur de température (91), dans une plage allant de 500 à 600 °C.

2. Installation de traitement de déchets selon la revendication 1,
dans laquelle ledit four de gazéification (1) comprend un dispositif d'alimentation en combustible (7) conçu pour apporter du combustible auxiliaire au lit fluidisé (1a).

3. Installation de traitement de déchets selon la revendication 2,
dans laquelle ledit dispositif d'alimentation en combustible (7) apporte un combustible auxiliaire solide, dont le diamètre particulaire moyen va de 0,1 à 3 mm, à la partie haute (freeboard) du côté supérieur du lit fluidisé (1a).

4. Installation de traitement de déchets selon l'une quelconque des revendications 1 à 3, comprenant en outre :
un séchoir conçu pour sécher lesdites boues déshydratées en exploitant la chaleur perdue de l'installation de production de ciment avant de les apporter au four de gazéification (1).

5. Procédé de traitement de déchets contenant des boues déshydratées, au moyen d'une installation de traitement de déchets (100) telle que définie dans l'une quelconque des revendications précédentes, comprenant :
la production d'un gaz de pyrolyse par gazéification desdits déchets au moyen d'un four de gazéification (1) de type à lit fluidisé installé à proximité d'une installation de production de ciment,
l'élévation de la température de l'air de fluidisation apporté audit four de gazéification en exploitant la chaleur perdue de ladite installation de production de ciment (200),
l'apport séparé, audit four de gazéification, desdites boues déshydratées et d'autres déchets,
le réglage du débit de l'air de fluidisation dans une plage prédéterminée, de la température de l'air de fluidisation et de la quantité desdites boues déshydratées et/ou des autres déchets entrants de manière à maintenir la température dudit lit fluidisé (1a) dans une plage allant de 500 à 600 °C ;
lesdites boues déshydratées étant apportées audit lit fluidisé (1a) présent dans ledit four de gazéification à partir d'emplacements multiples dispersés sur le côté supérieur de celui-ci, et
le transport du gaz de pyrolyse produit dans ledit four de gazéification (1) vers un dispositif de préchauffage (10) ou un four de calcination (20) du ciment présent dans ladite installation de production de ciment (200), le gaz contenant des résidus de carbonisation et cendres entraînés.

6. Procédé de traitement de déchets selon la revendication 5,
dans lequel le rapport entre la quantité desdites boues déshydratées entrantes et desdits autres déchets entrants est réglé de manière que le pouvoir calorifique inférieur de la totalité des déchets les contenant soit égal ou supérieur à une valeur prédéterminée.

7. Procédé de traitement de déchets selon la revendication 6, comprenant en outre :
l'obtention et le stockage préalables du pouvoir calorifique inférieur des boues déshydratées avant leur apport dans ledit four de gazéification,
l'apport des déchets, à l'exception des boues déshydratées, audit four de gazéification (1),
la mesure de la température du lit fluidisé (1a),
l'estimation du pouvoir calorifique inférieur des déchets, à l'exception desdites boues déshydratées, en fonction du résultat de ladite mesure, et
le réglage de la proportion des quantités de boues déshydratées et d'autres déchets entrants, en fonction de la valeur estimée et du pouvoir calorifique inférieur desdites boues déshydratées stockées, de manière que le pouvoir calorifique inférieur de la totalité des déchets soit égal ou supérieur à ladite valeur prédéterminée.

8. Procédé de traitement de déchets selon la revendication 7, comprenant en outre :
la mesure de la température du lit fluidisé (1a) pendant l'apport des boues déshydratées et des autres déchets audit four de gazéification (1), et
le réglage de la quantité desdites boues déshydratées entrantes en fonction du résultat de ladite mesure, de manière que la température du lit fluidisé (1a) s'approche d'une valeur cible.

9. Procédé de traitement de déchets selon la revendication 5, comprenant en outre :
la mesure de la température du lit fluidisé (1a) pendant l'apport des déchets, à l'exception des boues déshydratées, audit four de gazéification (1),
le réglage de la quantité desdits déchets entrants en fonction du résultat de ladite mesure de manière que la température du lit fluidisé (1a) soit supérieure à une valeur cible,
la mesure de la température du lit fluidisé (1a) pendant l'apport des boues déshydratées audit four de gazéification (1), et
le réglage de la quantité desdites boues déshydratées entrantes en fonction du résultat de ladite mesure de manière que la température du lit fluidisé (1a) soit équivalente à ladite valeur cible.

10. Procédé de traitement de déchets selon l'une quelconque des revendications 5 à 9, dans lequel la quantité de déchets totaux entrants contenant lesdites boues déshydratées est réglée de manière à maintenir une pression négative à l'intérieur du four de gazéification (1).
